# EUROPÄISCHE PATENTSCHRIFT

(11) **EP 3 485 499 B1**
(45) Veröffentlichungstag und Bekanntmachung des Hinweises auf die Patenterteilung: **20.05.2020**
(21) Anmeldenummer: 17754274.3
(22) Anmeldetag: 26.07.2017
(51) Int. Cl.: H01F 38/14, H01F 27/28, H02J 50/12, H04B 5/00

(54) **SPULENANORDNUNG**
COIL ASSEMBLY
DISPOSITIF À BOBINES

(30) Priorität: 27.07.2016 DE 102016113839
(43) Veröffentlichungstag der Anmeldung: 22.05.2019
(73) Patentinhaber: etaEM GmbH, 80689 München (DE)
(72) Erfinder: Eder, Stephan, 80689 München (DE)
(74) Vertreter: Manitz Finsterwald Patent- und Rechtsanwaltspartnerschaft mbB
(86) Internationale Anmeldenummer: PCT/EP2017/068860
(87) Internationale Veröffentlichungsnummer: WO 2018/019876

(56) Entgegenhaltungen:
- EP-A1- 2 701 284
- JP-A- 2002 075 753
- US-A1- 2014 197 832
- US-A1- 2015 323 620
- US-A1- 2017 236 638

## Beschreibung

Die vorliegende Erfindung betrifft eine Spulenanordnung zur Erzeugung oder zur Aufnahme von Magnetwechselfeldern. Solche Vorrichtungen sind grundsätzlich bekannt und umfassen jeweils eine elektrische Spule, die zur Erzeugung eines Magnetwechselfelds mittels einer Wechselspannung bestromt wird. Die Spule kann aber auch zur Aufnahme eines Magnetwechselfelds dienen, indem die Spannung, welche in der Spule aufgrund des die Spule durchflutenden Magnetwechselfelds induziert wird, an den Anschlüssen der Spule abgegriffen wird.

Vorrichtungen der oben genannten Art, die auch als Magnetantennen bezeichnet werden können, werden z.B. zur elektrischen Leistungsübertragung verwendet, insbesondere zur drahtlosen elektrischen Versorgung von batterie- oder akkubetriebenen elektrischen Verbrauchern. Weitere Anwendungen liegen in der Kommunikationstechnik (Übertragung von Kommunikationssignalen) und der Messtechnik (z.B. Magnetfeldsonden). Eine entsprechende Vorrichtung für die Magnetresonanzbildgebung ist aus der US 2015/0323620 A1 bekannt.

Ein Problem der genannten Vorrichtungen besteht in den im Betrieb auftretenden elektromagnetischen Verlusten, die z.B. die Effizienz einer elektrischen Leistungsübertragung negativ beeinflussen können. Mit anderen Worten ist der jeweilige Wirkungsgrad der Vorrichtungen nicht zufriedenstellend. Aus diesem Grund wird mittels geeigneter elektronischer Schaltungen versucht, das Resonanzverhalten einer jeweiligen Vorrichtung derart zu beeinflussen, dass der Wirkungsgrad der Vorrichtung zumindest im Betriebspunkt (z.B. bei einer bestimmten Wechselspannungsfrequenz) erhöht ist. Im Idealfall stimmt die Frequenz, bei der eine sogenannte Resonanzüberhöhung der Vorrichtung ihren Maximalwert annimmt, mit der Wechselspannungsfrequenz überein, bei der die Vorrichtung betrieben werden soll.

Eine elektronische Schaltung zur Erzeugung einer gewünschten Resonanzüberhöhung umfasst beispielsweise einen Drehkondensator, der mit einer zum Erzeugen oder zum Aufnehmen von Magnetwechselfeldern vorgesehenen Spule gekoppelt wird. Des Weiteren können zusätzliche Kondensatoren und Induktivitäten eingesetzt werden, um eine bestimmte Resonanzüberhöhung zu erzwingen. Die Kosten für eine solche elektronische "Resonanzoptimierungsschaltung" sowie der Aufwand zur Kalibrierung dieser Schaltung stellen jedoch einen erheblichen Nachteil dar, sodass Bedarf an einer einfacheren und kostengünstigeren Lösung zur Resonanzoptimierung besteht.

Erfindungsgemäß wird eine Spulenanordnung vorgeschlagen, die wenigstens eine Primärspule mit zumindest einer Windung und wenigstens eine zur selektiven Beeinflussung des Resonanzverhaltens der Spulenanordnung vorgesehene Sekundärspule mit zumindest einer Windung umfasst. Die Primärspule weist einen Hauptleiter und einen den Hauptleiter zumindest abschnittsweise umgebenden Abschirmleiter auf, wobei der Abschirmleiter mit dem Hauptleiter elektrisch leitend verbunden ist und zumindest einen Abschnitt aufweist, der elektrisch unterbrochen ist und wobei die Primärspule und die Sekundärspule nicht elektrisch miteinander verbunden sind.

Die Primärspule kann auch als Nutzspule bezeichnet werden, wobei die Sekundärspule als Hilfsspule fungiert, um das Resonanzverhalten der gesamten Spulenanordnung, insbesondere der Primärspule, selektiv zu beeinflussen. Als "selektive Beeinflussung" wird in diesem Zusammenhang eine gezielte Veränderung hin zu einem gewünschten Zustand verstanden. Hierunter fällt auch eine Optimierung anhand vorgegebener Kriterien, z.B. eine Resonanzüberhöhung in einem bestimmten Frequenzbereich oder eine einzuhaltende Maximalimpedanz. Anders ausgedrückt kann die selektive Beeinflussung auf eine Verbesserung der Güte der Primärspule bzw. des sogenannten Q- oder Gütefaktors ausgelegt sein. Mit der erfindungsgemäßen Spulenanordnung ist es z.B. möglich, den Gütefaktor von einem üblichen Wert von Q=0,5 auf Werte im Bereich von Q=5 zu verbessern.

Sowohl die Primärspule als auch die Sekundärspule können jeweils als eine einfache - ein- oder mehrwindige - Leiterschlaufe ("Ringantenne") ausgebildet sein, wobei der Leiter z.B. kreisförmig auf sich selbst zurückgebogen ist. Vorzugsweise ist die Primärspule zumindest abschnittsweise elektrisch isoliert, wodurch unerwünschte elektrische Kontaktierungen der Primärspule unterbunden werden.

Die erfindungsgemäße Spulenanordnung vereint mehrere Vorteile. Einerseits kommt die Spulenanordnung ohne eine aufwändige Resonanzoptimierungsschaltung aus. Zur Beeinflussung des Resonanzverhaltens werden, insbesondere ausschließlich, eine oder mehrere Sekundärspulen verwendet. Diese Lösung hat sich als überraschend effektiv herausgestellt und besitzt den Vorzug niedriger Kosten bzw. einer leichten Umsetzbarkeit. Ferner kann die, insbesondere induktive, Impedanz der Primärspule niedriger sein als bei konventioneller Beeinflussung des Resonanzverhaltens mittels separater elektronischer Schaltung. In letzterem Fall muss die Schwingung in der Spule entgegen des geringen Wirkungsgrads der Spule (hohe Dämpfung) gewissermaßen erzwungen werden. Bei der erfindungsgemäßen Spulenanordnung wird der Wirkungsgrad hingegen unmittelbar erhöht, indem die Dämpfung der Schwingung selbst verringert wird. Die Leistungsverluste können so erheblich gesenkt werden. Insbesondere werden in Abwärme umgesetzte Verluste gesenkt, sodass sich die erfindungsgemäße Spulenanordnung im Betrieb weniger stark aufheizt als konventionell resonanzoptimierte Spulen.

Andererseits zeichnet sich die erfinderische Lösung durch eine geschickte Konfiguration eines Haupt- und Abschirmleiters aus. Der Abschirmleiter besitzt insbesondere die Aufgabe, das von dem Hauptleiter ausgehende elektromagnetische Feld von der elektrischen Feldkomponente zu befreien, sodass jenseits des Abschirmleiters möglichst ein reines Magnetwechselfeld verbleibt, welches das Nutzfeld darstellt. Gleichzeitig kann der Abschirmleiter ab dem Punkt, wo der Hauptleiter mit dem Abschirmleiter verbunden ist, als elektrischer Anschluss der Primärspule fungieren. Beispielsweise kann zur Erzeugung eines Magnetwechselfelds eine elektrische Wechselspannung zwischen dem Hauptleiter und dem Abschirmleiter angelegt werden. Der elektrisch unterbrochene Abschnitt des Abschirmleiters ist vorzugsweise so positioniert, dass der Abschirmleiter in der Spule keinen elektrisch kurzgeschlossenen Ring bildet, um unerwünschte Kurzschlussströme zu vermeiden. Auch die Sekundärspule ist vorzugsweise so ausgestaltet, dass Kurzschlussströme in der Sekundärspule vermieden werden. Zu diesem Zweck können die Anschlüsse der Sekundärspule offen sein. Dies hat sich als besonders effiziente Maßnahme herausgestellt, um das gewünschte Resonanzverhalten zu erreichen. Vorzugsweise wird die Spulenanordnung bei entsprechend hohen Wechselspannungs- bzw. Magnetwechselfeldfrequenzen betrieben, sodass der sogenannte Skineffekt im Abschirmleiter zur Unterdrückung des elektrischen Feldes zum Tragen kommt, z.B. bei Frequenzen von 1 MHz und mehr. Die erfindungsgemäßen Vorteile lassen sich in geeigneten Konfigurationen auch bereits bei geringeren Frequenzen erzielen.

Wie oben erwähnt ist die Sekundärspule dafür vorgesehen, das Resonanzverhalten der Spulenanordnung selektiv zu beeinflussen. Die Art und der Grad der Beeinflussung kann abhängig sein von zumindest einem der folgenden Parameter: Anzahl der Windungen der Primärspule und/oder der wenigstens einen Sekundärspule, Durchmesser der Primärspule und/oder der wenigstens einen Sekundärspule, Position der wenigstens einen Sekundärspule relativ zu der Primärspule (z.B. Abstand zwischen Sekundärspule und Primärspule), Ausrichtung der wenigstens einen Sekundärspule relativ zu der Primärspule (z.B. koaxial (parallel), schräg), Anzahl von Sekundärspulen. Es versteht sich, dass diese Parameter wahlweise unabhängig voneinander variiert werden können, um das Resonanzverhalten in einer gewünschten Weise auszubilden. Voraussetzung ist lediglich, dass die Sekundärspule so ausgebildet und in räumlicher Nähe zu der Primärspule angeordnet ist, dass sie - zumindest in einem gewünschten Betriebspunkt, z.B. einer bestimmten Wechselspannungsfrequenz - mit der Primärspule zusammenwirken kann.

Als weitere Parameter, welche sich auf das Resonanzverhalten auswirken, sind die Beschaffenheit und die Konfiguration des Hauptleiters und des Abschirmleiters zu nennen. Einerseits spielen der jeweilige Durchmesser des Haupt- und Abschirmleiters eine große Rolle. Andererseits sind der Abstand zwischen dem Haupt- und dem Abschirmleiter sowie die Fläche des Abschirmleiters von Bedeutung. Es versteht sich, dass auch vorhandenes Isolationsmaterial, insbesondere dessen relative Permittivität relevant ist. Als besonders relevant hat sich insbesondere das Isolationsmaterial herausgestellt, welches sich zwischen dem Hauptleiter und dem Abschirmleiter erstreckt, da hierdurch die Kapazität zwischen den beiden Leitern und somit das Resonanzverhalten der gesamten Spulenanordnung wesentlich beeinflusst werden kann.

Zur selektiven Beeinflussung des Resonanzverhaltens kann die Primärspule wahlweise auf unterschiedliche Weise ausgebildet sein. Detaillierte Beispiele hierzu - insbesondere im Hinblick auf die Verbindung zwischen dem Haupt- und dem Abschirmleiter sowie auf den elektrisch unterbrochenen Abschnitt des Abschirmleiters - werden weiter unten angegeben.

Wie bereits erwähnt, kann die Spulenanordnung sowohl mehrere Primärspulen als auch mehrere Sekundärspulen umfassen, wobei diese unabhängig voneinander unterschiedlich ausgestaltet und angeordnet sein können. Insbesondere müssen sämtliche Spulen der Spulenanordnung nicht notwendigerweise symmetrisch angeordnet werden. Sofern mehrere Primärspulen vorgesehen sind, so können diese parallel oder seriell geschaltet sein, d.h. elektrisch miteinander verbunden sein. Somit kann z.B. für alle Primärspulen ein gemeinsamer Spannungsabgriff vorgesehen sein oder es kann eine Wechselspannung über einen gemeinsamen elektrischen Anschluss an alle Primärspulen angelegt werden.

Vorteilhafte Ausführungsformen der Erfindung sind in der Beschreibung, den Unteransprüchen sowie den Zeichnungen angegeben.

Gemäß einer Ausführungsform weist die wenigstens eine Sekundärspule einen Hauptleiter und einen den Hauptleiter zumindest abschnittsweise umgebenden Abschirmleiter auf. Abweichend zu der Primärspule kann der Abschirmleiter der Sekundärspule von dem Hauptleiter elektrisch isoliert und/oder unterbrechungsfrei ausgebildet sein. Dies muss aber nicht unbedingt so sein.

Grundsätzlich können die Primärspule und die Sekundärspule ähnlich oder sogar identisch aufgebaut sein. Zu beachten ist jedoch, dass die Sekundärspule vorzugsweise als rein passives Bauelement, d.h. ohne Speisespannung oder Spannungsabgriff, betrieben wird. Entsprechend kann die Sekundärspule z.B. ohne elektrische Anschlüsse ausgebildet werden. Gemäß der vorliegenden Erfindung sind die Primärspule und die Sekundärspule nicht elektrisch miteinander verbunden. Erfindungsgemäß wird zwischen den beiden Spulen bzw. Spulengruppen lediglich ein im Wesentlichen magnetfeldbasiertes induktives Zusammenwirken angestrebt. Gemäß einer bevorzugten Ausführungsform sind die Primärspule und/oder die Sekundärspule zumindest abschnittsweise als Koaxialkabel ausgebildet, d.h. der Hauptleiter (Seele) ist koaxial in dem Abschirmleiter angeordnet, welcher hohlzylindrisch ausgebildet ist. Zwischen dem Hauptleiter und dem Abschirmleiter kann elektrisches Isolationsmaterial vorgesehen sein. Zusätzlich kann der Abschirmleiter von Isolationsmaterial umgeben sein. Grundsätzlich kann das für die Primär- und/oder Sekundärspule vorgesehene Koaxialkabel als handelsübliches Koaxialkabel ausgebildet sein, welches praktisch unbeschränkt und kostengünstig auf dem Markt erhältlich ist. Handelsübliche Koaxialkabel sind in der Regel flexibel, sodass hieraus eine Spule besonders einfach hergestellt und im Zuge einer späteren Montage leicht an die Maße eines Gehäuses angepasst werden kann. Grundsätzlich kommen aber auch weniger flexible oder sogar starre Koaxialkabel bzw. Koaxialleiter in Betracht. Es muss sich jedenfalls nicht zwingend um ein handelsübliches Koaxialkabel bekannter Bauart handeln. Denkbar sind auch koaxialkabelähnliche Leiter, die z.B. einen isolierten Leiter mit nachträglich umwickelter Abschirmung umfassen.

Nach einer weiteren Ausführungsform ist die wenigstens eine Sekundärspule koaxial zu der Primärspule angeordnet. Die Bauform der Spulenanordnung kann hierdurch vergleichsweise kompakt ausgebildet sein. Insbesondere kann die wenigstens eine Sekundärspule - direkt oder indirekt - an der Primärspule befestigt sein. Die Sekundärspule kann beispielsweise mit bekannten Kabelbindern direkt an der Primärspule befestigt sein, wobei aufgrund einer zumindest den Abschirmleiter der Primärspule umgebenden Isolierung ein elektrischer Kontakt zwischen der Primärspule und der Sekundärspule ausgeschlossen werden kann. Eine indirekte Befestigung kann z.B. durch einen gemeinsamen Rahmen realisiert werden, an dem sowohl die Primärspule als auch die Sekundärspule - insbesondere in einem wohldefinierten Abstand zueinander - befestigt sind. Die Anordnung der Spulen zueinander kann somit einfach und kostengünstig realisiert werden.

Eine besonders kompakte Bauform kann erzielt werden, wenn der Durchmesser der Sekundärspule zumindest im Wesentlichen gleich dem Durchmesser der Primärspule ist. Der Grad der Beeinflussung des Resonanzverhaltens durch die Sekundärspule kann hierdurch ebenfalls verbessert werden.

Die Erfindung bezieht sich ferner auf ein System mit wenigstens einer ersten Spulenanordnung zum Erzeugen von Magnetwechselfeldern und wenigstens einer zweiten Spulenanordnung zum Aufnehmen von Magnetwechselfeldern, wobei die erste und/oder die zweite Spulenanordnung nach zumindest einer der vorstehend beschriebenen Ausführungsformen ausgebildet sind. Gemäß einer vorteilhaften Ausführungsform des Systems sind das Resonanzverhalten der ersten Spulenanordnung und das Resonanzverhalten der zweiten Spulenanordnung aneinander angepasst, wobei auch eine wechselseitige Beeinflussung der beiden Spulenanordnungen berücksichtigt werden kann. Vorzugsweise sind die jeweiligen Resonanzverhalten im Wesentlichen gleich, sodass die beiden Spulenanordnungen resonant induktiv gekoppelt werden können und sich für das System ein besonders hoher Gesamtwirkungsgrad ergibt.

Zur Verbesserung des magnetischen Flusses zwischen der ersten und zweiten Spulenanordnung können auch mehrere erste und/oder zweite Spulenanordnungen vorgesehen werden, die jeweils unterschiedlich ausgebildet sein können und nicht notwendigerweise symmetrisch angeordnet sein müssen. Durch Verwendung mehrerer erster und/oder zweiter Spulenanordnungen kann der Gesamtwirkungsgrad nochmals erhöht werden, wobei sich die einzelnen Magnetwechselfelder zu einem überwiegend die Spulenanordnungen durchflutenden Nutzfeld überlagern können. Vorzugsweise werden die ersten und zweiten Spulenanordnungen derart relativ zueinander angeordnet, dass sich die "Magnetfeldlinien" zumindest überwiegend gleichsinnig durch alle Spulenanordnungen erstrecken, d.h. nicht gegeneinander orientiert sind. Es versteht sich, dass die Spulenanordnungen vorzugsweise synchron betrieben werden, d.h. dass insbesondere die Primärspulen gleichzeitig bestromt werden bzw. eine induzierte Spannung zum selben Zeitpunkt an allen Primärspulen abgegriffen wird.

Weiterer Gegenstand der Erfindung ist die Verwendung einer Spulenanordnung nach zumindest einer der oben beschriebenen Ausführungsformen zur drahtlosen Versorgung eines elektrischen Energiespeichers, insbesondere einer mobilen elektrischen oder elektronischen Vorrichtung, mit elektrischer Energie. Mit anderen Worten kann die Spulenanordnung zum induktiven Laden von mobilen elektrischen oder elektronischen Verbrauchern verwendet werden, insbesondere von rein elektrischen oder hybriden Kraftfahrzeugen oder mobilen Kommunikationseinrichtungen, z.B. Smartphones oder Tablets.

Die Erfindung umfasst ferner die Verwendung eines Systems der oben beschrieben Art, wobei die Primärspule der ersten Spulenanordnung mit einem elektrischen Versorgungsnetz gekoppelt ist und die Primärspule der zweiten Spulenanordnung mit einem elektrischen Energiespeicher, insbesondere einer mobilen elektrischen oder elektronischen Vorrichtung, gekoppelt ist. Mit anderen Worten kann die genannte Anwendung zum induktiven Laden auch mit dem erfindungsgemäßen System erfolgen. Es versteht sich, dass die Kopplung der ersten Spulenanordnung mit dem elektrischen Versorgungsnetz nicht so ausgestaltet sein muss, dass eine elektrisch leitende Verbindung zwischen der ersten Spulenanordnung und dem Versorgungsnetz besteht. Anstelle einer solchen Verbindung kann auch eine induktive Kopplung vorgesehen werden. Selbiges trifft auf die Kopplung zwischen der zweiten Spulenanordnung und dem elektrischen Energiespeicher (z.B. Batterie oder Akku) zu.

Vorteilhafte Anwendungsfälle für eine erfindungsgemäße Spulenanordnung bzw. ein erfindungsgemäßes System liegen auch in der elektrischen Anbindung von abgeschlossenen Systemen, die nicht drahtgebunden, z.B. mittels eines elektrischen Steckers, versorgt werden können oder sollen. Allgemein betrifft dies "abdichtende Systeme", die in einem Gehäuse einen speziell angepassten Druck aufweisen oder ein z.B. flüssiges Medium beinhalten oder fernhalten sollen (z.B. wasserdichte Mobiltelefone oder Kameras). Auch die Energieversorgung von elektrischen Implantaten, welche im Körper eines Menschen oder Tiers eingepflanzt werden, ist mit Hilfe der Erfindung drahtlos zu bewerkstelligen.

Zusätzlich kann eine erfindungsgemäße Spulenanordnung bzw. ein erfindungsgemäßes System auch dazu genutzt werden, um Daten zu übertragen. Bei einer entsprechend Ausführungsform der Spulenanordnung ist die Sekundärspule mit einem Datensignal beaufschlagbar und/oder zum Empfang eines Datensignals ausgebildet. Ein entsprechendes System umfasst zumindest zwei derartige Spulenanordnungen. Beispielsweise ist die Sekundärspule der ersten Spulenanordnung mit einer Datenquelle gekoppelt und die Sekundärspule der zweiten Spulenanordnung ist mit einem Datenempfänger gekoppelt, und umgekehrt. Ein derartiges System ermöglicht neben der Energieübertragung auch die Übertragung von Informationen, die beispielsweise zur Steuerung der Energieübertragung genutzt werden können. Grundsätzlich sind aber auch andere Arten von Daten übertragbar.

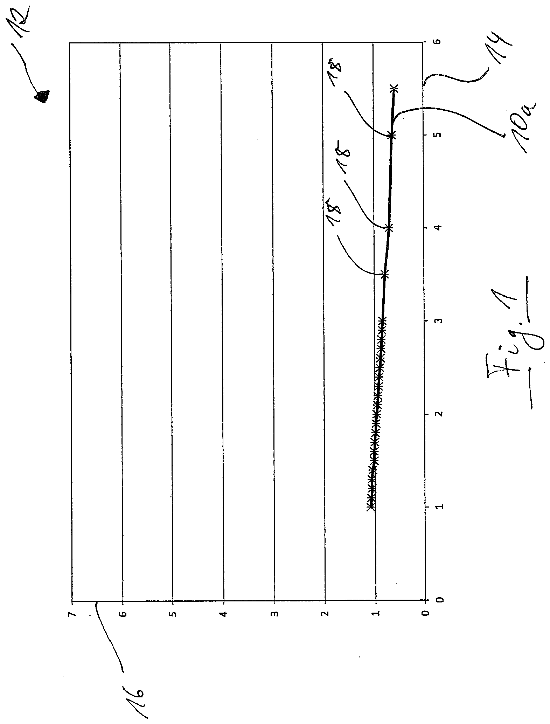

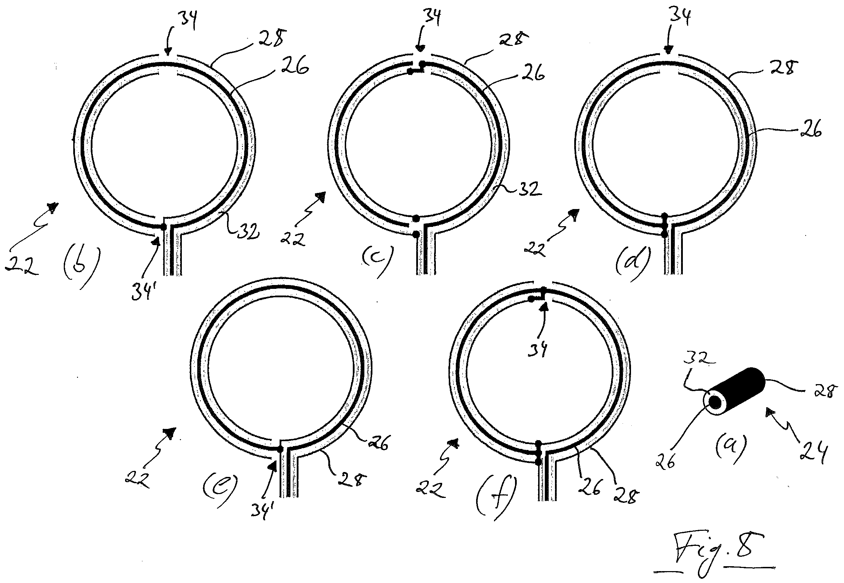

Die Erfindung wird nachfolgend lediglich beispielhaft anhand der Zeichnungen erläutert, in denen Fig. 1 bis 7 jeweils ein Koordinatensystem zeigen, in dem wenigstens eine experimentell ermittelte Kurve der magnetischen Induktion über die Frequenz angegeben ist, im Folgenden auch - im Hinblick auf die Ermittlung des Resonanzverhaltens - auch Resonanzspektrum genannt. In Fig. 8 sind verschiedene Ausführungsformen der Primärspule gezeigt. Im Einzelnen zeigt:
- Fig. 1: ein Resonanzspektrum einer einwindigen Primärspule ohne Sekundärspule;
- Fig. 2: das Resonanzspektrum der Fig. 1 sowie Resonanzspektren verschiedener erfindungsgemäßer Spulenanordnungen mit jeweils einer Primärspule mit einer Windung und mit verschiedenen Sekundärspulen;
- Fig. 3: Resonanzspektren verschiedener erfindungsgemäßer Spulenanordnungen mit jeweils einer Primärspule mit zwei Windungen und mit verschiedenen Sekundärspulen;
- Fig. 4: weitere Resonanzspektren verschiedener erfindungsgemäßer Spulenanordnungen mit jeweils einer Primärspule mit zwei Windungen und mit verschiedenen Sekundärspulen;
- Fig. 5: Resonanzspektren verschiedener erfindungsgemäßer Spulenanordnungen mit jeweils einer Primärspule mit drei Windungen und mit verschiedenen Sekundärspulen;
- Fig. 6: Resonanzspektren verschiedener erfindungsgemäßer Spulenanordnungen mit jeweils einer Primärspule mit vier Windungen und mit verschiedenen Sekundärspulen;
- Fig. 7: Resonanzspektren verschiedener erfindungsgemäßer Spulenanordnungen mit jeweils einer Primärspule mit fünf Windungen und mit verschiedenen Sekundärspulen;
- Fig. 8a: eine Perspektivansicht eines Koaxialkabels;
- Fig. 8b: Querschnittsansichten verschiedener Varianten einer RF-Koax-B-
- bis 8f: Feld-Spule;
- Fig. 9a: Systeme in schematischer Darstellung mit jeweils wenigstens einer
- bis 9d: ersten und wenigstens einer zweiten Spulenanordnung.

Im Folgenden können gleiche oder gleichartige Teile mit denselben Bezugszeichen gekennzeichnet sein.

Fig. 1 zeigt ein Resonanzspektrum 10a einer Primärspule mit einer Windung (n = 1, Spule nicht gezeigt). Das Resonanzspektrum 10a ist ein einem Koordinatensystem 12 eingetragen, das auf der x-Achse 14 die Dimension "Wechselspannungsfrequenz" und auf der y-Achse 16 die Dimension "magnetischer Induktionsfaktor" vorsieht. Die x-Achse 14 umfasst einen Bereich von 0 bis 6 MHz. Der bezüglich der y-Achse 16 angegebene magnetische Induktionsfaktor ist das Verhältnis von induzierter zu eingespeister Spannung. Die eingespeiste Spannung ist diejenige Wechselspannung, die zur Erzeugung des Magnetwechselfeldes an die Primärspule angelegt wird. Die induzierte Spannung ist diejenige Spannung, die von dem erzeugten Magnetwechselfeld z.B. in einer Magnetfeldmesssonde (in einem definiertem Abstand von der Primärspule) hervorgerufen wird. Der magnetische Induktionsfaktor gibt also letztlich an, wie effizient die Speisespannung in ein induktiv gemessenes Magnetfeld (B-Feld) umgesetzt wird. Der magnetische Induktionsfaktor wird im Folgenden auch als Wirkungsgrad bezeichnet.

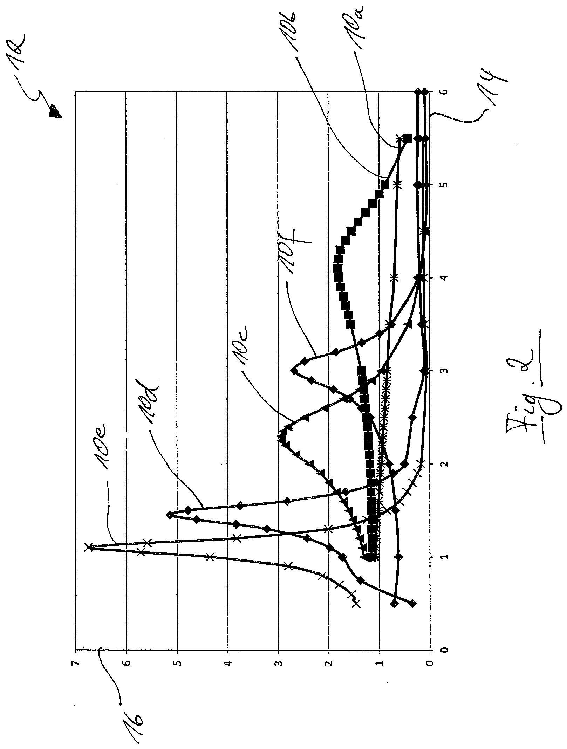

Das Resonanzspektrum 10a umfasst mehrere diskrete Messpunkte 18, wobei das Resonanzspektrum 10a zwischen den einzelnen Messpunkten 18 interpoliert ist. Wie in Fig. 1 gut zu erkennen ist, weist das Resonanzspektrum 10a keine Resonanzüberhöhung auf, d.h. das Resonanzspektrum 10a ist im Meßbereich im Wesentlichen flach, sodass der Wirkungsgrad im Wesentlichen unabhängig von der Frequenz gleich niedrig ist. Zur Beeinflussung des Resonanzverhaltens der Primärspule, d.h. zur Veränderung des Resonanzspektrums 10a, kann nun wenigstens eine Sekundärspule (nicht gezeigt) in das Nahfeld der Primärspule gebracht werden, sodass sich eine erfindungsgemäße Spulenanordnung (nicht gezeigt) ergibt. Entsprechend resultierende Resonanzspektren 10b bis 10f sind in Fig. 2 gezeigt, wobei das Resonanzspektrum 10a der Fig. 1 zur Erleichterung eines Vergleichs der Spektren 10a bis 10f ebenfalls in Fig. 2 eingetragen ist.

Das Resonanzspektrum 10b ergibt sich für den Fall einer Sekundärspule mit zwei Windungen (m = 2), wobei eine leichte Resonanzüberhöhung im Bereich um 4,2 MHz erzielt wird. Die Resonanzspektren 10c bis 10e ergeben sich für die Fälle einer Sekundärspule mit drei (m = 3; 10c), vier (m = 4; 10d) und fünf (m = 5; 10e) Windungen. Wie zu erkennen ist, werden mit zunehmender Windungszahl m der Sekundärspule Resonanzüberhöhungen mit höheren Maxima erzielt, wobei sich der Bereich der Resonanzüberhöhung bei abnehmender Bandbreite zu niedrigeren Frequenzen hin verschiebt.

Das Resonanzspektrum 10f ergibt sich für den Fall von zwei Sekundärspulen mit jeweils zwei Windungen (2 x m = 2). Wie zu erkennen ist, unterscheidet sich das Resonanzspektrum 10f von dem Resonanzspektrum 10d (eine Sekundärspule mit vier Windungen (m=4). So liegt der Bereich der Resonanzüberhöhung bei der konkret verwendeten Spulenanordnung bei dem Resonanzspektrum 10f im Vergleich zum Resonanzspektrum 10d bei ungefähr der doppelten Frequenz, wobei das Maximum in etwa halbiert ist. Ferner ist die Bandbreite etwa verdoppelt. Bei anderen Spulenanordnungen können sich andere Überhöhungen oder Verschiebungen ergeben.

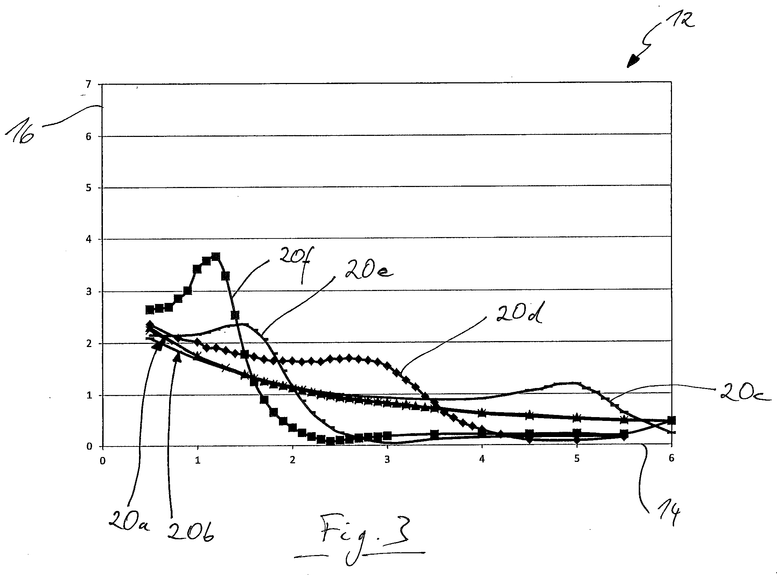

In Fig. 3 sind Resonanzspektren 20a bis 20f für den Fall einer Primärspule mit zwei Windungen (n = 2) angegeben. Das Resonanzspektrum 20a unterscheidet sich von den Resonanzspektren 20b bis 20f dadurch, dass sich bei der Ermittlung des Resonanzspektrums 20a keine Sekundärspule im Nahfeld der Primärspule befunden hat. Die Resonanzspektren 20b bis 20f sind demgegenüber ermittelt worden mit einer Anordnung einer Sekundärspule mit einer (m = 1; 20b), zwei (m = 2; 20c), drei (m = 3; 20d), vier (m = 4; 20e) und fünf (m = 5; 20f) Windungen im Nahfeld der Primärspule (n = 2). Auffällig ist, dass das Resonanzspektrum 20a für den Fall einer m = 1 Sekundärspule (vgl. 20b) nahezu unverändert ist. Erst bei Verwendung einer m = 2 Sekundärspule (20c) zeigt sich eine leichte Resonanzüberhöhung bei etwa 5 MHz. Mit zunehmender Windungszahl m der Sekundärspule verschiebt sich der Bereich der Resonanzüberhöhung zu niedrigeren Frequenzen wobei sich das jeweilige Maximum erhöht und die Bandbreite abnimmt.

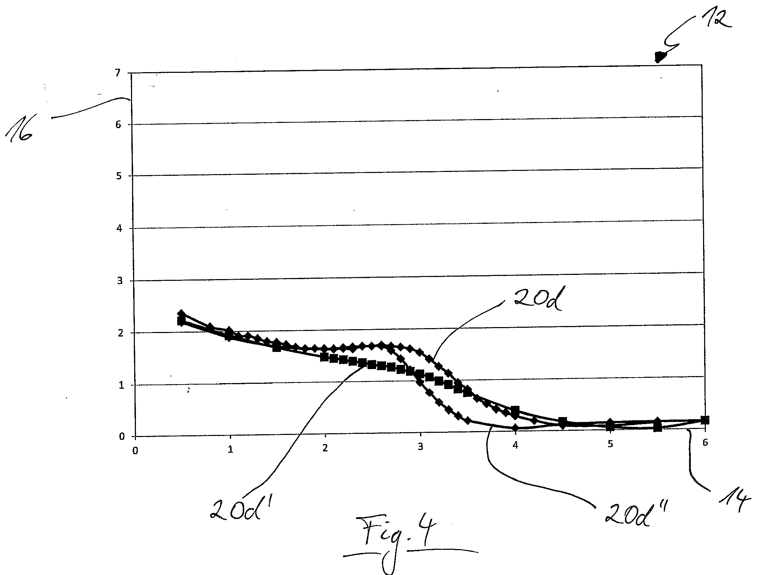

In Fig. 4 ist das Resonanzspektrum 20d von Fig. 3 (n = 2 Primärspule und m = 3 Sekundärspule) nochmals gezeigt. Im Vergleich hierzu sind Resonanzspektren 20d' und 20d" angegeben, die ebenfalls für den Fall einer n = 2 Primärspule und einer m = 3 Sekundärspule ermittelt worden sind, jedoch in unterschiedlich dichter Packung. Zur Ermittlung des Resonanzspektrums 20d sind die Primär- und Sekundärspule lediglich lose aneinander gelegt worden (wie auch bei den übrigen Resonanzspektren 10a - f, 20a - c und 20e - f). Zur Ermittlung des Resonanzspektrums 20d' wurden die Primär- und Sekundärspule in einen gemeinsamen Schlauch mit einem Schlauchdurchmesser von etwa 5 cm gepackt. Das Resonanzspektrum 20d" wurde für eine Anordnung ermittelt, bei der die Primär- und Sekundärspule mittels Kabelbindern fest zusammengezurrt sind. Wie zu erkennen ist, nimmt die Ausprägung der Resonanzüberhöhung bei den Resonanzspektren 20d' und 20d" im Vergleich zu dem Resonanzspektrum 20d ab.

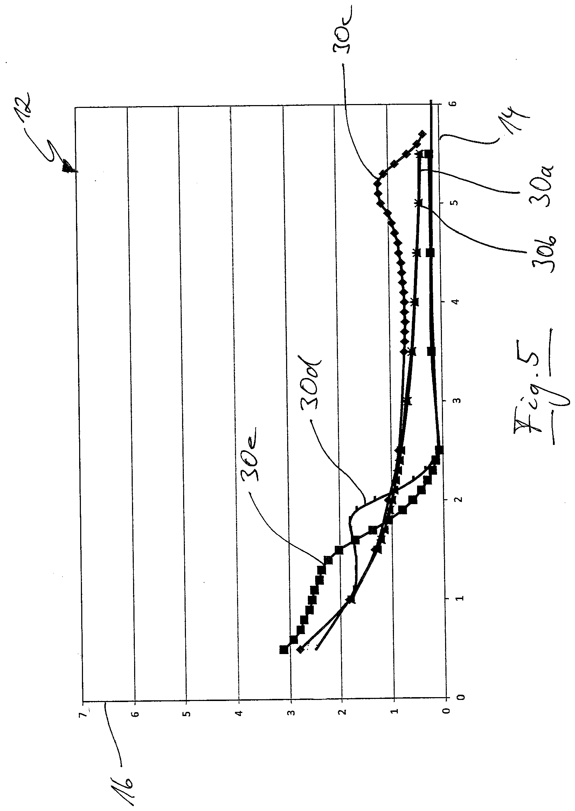

In Fig. 5 sind Resonanzspektren 30a bis 30e für Anordnungen mit einer n = 3 Primärspule angegeben. Das Resonanzspektrum 30a unterscheidet sich von den Resonanzspektren 30b bis 30e dadurch, dass sich bei der Ermittlung des Resonanzspektrums 30a keine Sekundärspule im Nahfeld der Primärspule befunden hat. Die Resonanzspektren 30b bis 30e sind demgegenüber ermittelt worden mit einer Sekundärspule mit einer (m = 1; 30b), zwei (m = 2; 30c), vier (m = 4; 30d) und fünf (m = 5; 30e) Windungen im Nahfeld der Primärspule mit drei Windungen. Ähnlich wie bei den Resonanzspektren 20a bis 20f von Fig. 3 ist das Resonanzspektrum 30a erst ab einer Sekundärspule mit m > 1 merklich verändert (vgl. Resonanzspektren 30a, 30b mit 30c).

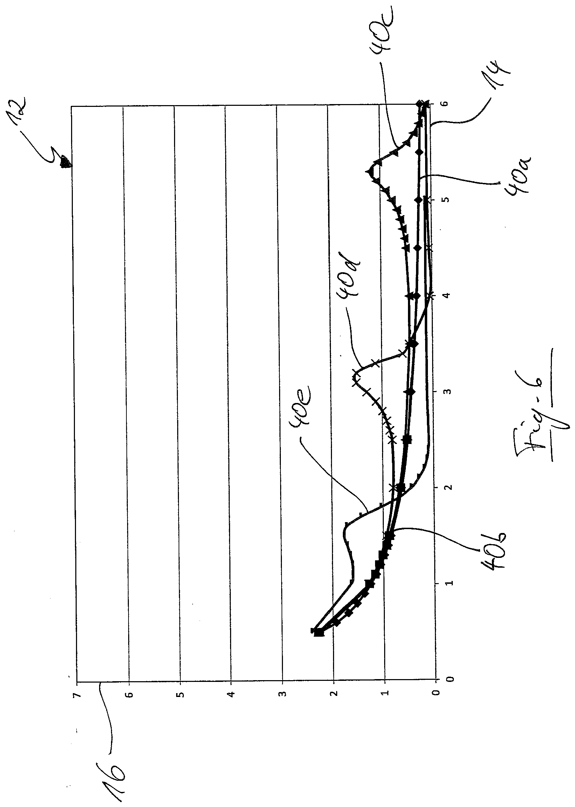

In Fig. 6 sind Resonanzspektren 40a bis 40e für Anordnungen mit einer n = 4 Primärspule angegeben, wobei das Resonanzspektrum 40a ohne Sekundärspule ermittelt worden ist. Bei der Messung der Resonanzspektren 40b bis 40e befand sich eine Sekundärspule mit einer (m = 1; 40b), zwei (m = 2; 40c), drei (m = 3; 40d) und fünf (m = 5; 40e) Windungen im Nahfeld der Primärspule mit n = 4.

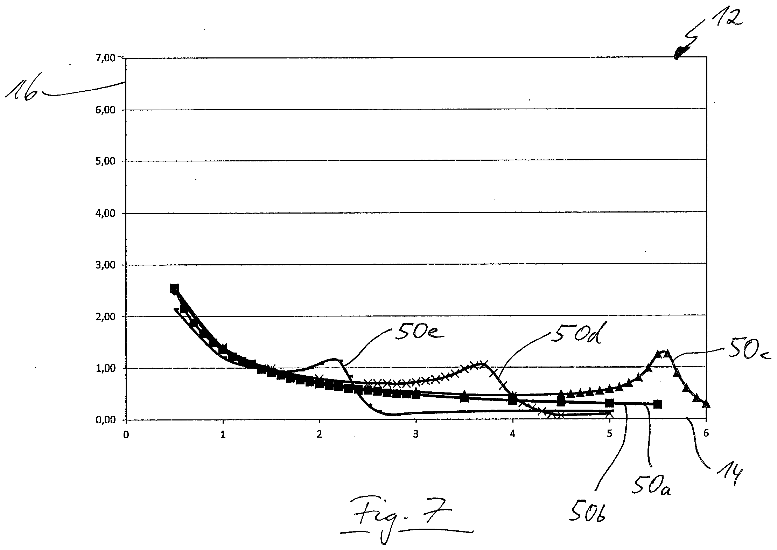

Fig. 7 zeigt Resonanzspektren 50a bis 50e für den Fall einer Primärspule mit fünf Windungen (n = 5), wobei das Resonanzspektrum 50a ohne Sekundärspule ermittelt worden ist. Bei Ermittlung der Resonanzspektren 50b bis 50e befand sich eine Sekundärspule mit einer (m = 1; 50b), zwei (m = 2; 50c), drei (m = 3; 50d) und vier (m = 4; 50e) Windungen im Nahfeld der Primärspule mit n = 5.

In Fig. 8b bis 8f sind verschiedene Varianten von "RF-Koax-B-Feld-Spulen" 22 in einer jeweiligen Längsschnittansicht gezeigt. Jede der gezeigten RF-Koax-B-Feld-Spulen 22 kann als Primärspule einer erfindungsgemäßen Spulenanordnung (nicht gezeigt) fungieren. Eine jeweilige RF-Koax-B-Feld-Spule 22 ist aus einem Koaxialkabel 24 gefertigt, wovon ein Abschnitt in Fig. 8a perspektivisch gezeigt ist. Das Koaxialkabel 24 umfasst einen Hauptleiter 26 und einen hohlzylindrischen Abschirmleiter 28, wobei sich zwischen dem Hauptleiter 26 und dem Abschirmleiter 28 elektrisches Isolationsmaterial 32 erstreckt. Der Abschirmleiter 28 kann ferner von einem elektrisch isolierenden Mantel (nicht gezeigt), z.B. Kunststoff, umgeben sein. Es versteht sich, dass der Abschirmleiter 28 vorzugsweise umfänglich, d.h. um den Hauptleiter 26 herum, geschlossen ist.

Bei der RF-Koax-B-Feld-Spule 22 der Fig. 8b ist der Hauptleiter 26 nach einer Windung mit dem Abschirmleiter 28 elektrisch verbunden. Der Abschirmleiter 28 weist zwei Abschnitte 34 und 34' auf, die elektrisch unterbrochen sind. Bei der RF-Koax-B-Feld-Spule 22 der Fig. 8c ist der Hauptleiter 26 nach einer halben Windung mit dem Abschirmleiter 28 elektrisch verbunden. Der Abschirmleiter 28 weist wiederum einen Abschnitt 34 auf, der elektrisch unterbrochen ist. Im Gegensatz zu dem Fall von Fig. 8b ist der linkseitige Schenkel des Abschirmleiters 28 (halbe Windung) mit dem rechten Schenkel des Abschirmleiters 28 elektrisch verbunden. Dahingegen ist der Hauptleiter 26 im linken Schenkel weder mit dem Abschirmleiter 28 noch mit Hauptleiter 26 in dem rechten Schenkel verbunden.

Bei der RF-Koax-B-Feld-Spule 22 der Fig. 8d ist der Hauptleiter 26 wieder nach einer Windung mit dem Abschirmleiter 28 elektrisch verbunden (wie in Fig. 8b). Der Abschirmleiter 28 weist nach eine halben Windung einen Abschnitt 34 auf, der elektrisch unterbrochen ist. Ferner 8b ist der linkseitige Schenkel des Abschirmleiters 28 (halbe Windung) mit dem rechten Schenkel des Abschirmleiters 28 elektrisch verbunden (wie in Fig. 8c).

Bei der RF-Koax-B-Feld-Spule 22 der Fig. 8e ist der Hauptleiter 26 nach einer Windung mit dem Abschirmleiter 28 elektrisch verbunden (wie in Fig. 8b). Der Abschirmleiter 28 weist nach einer Windung einen elektrisch unterbrochenen Abschnitt 34' auf. Verglichen mit der in Fig. 8b gezeigten Ausführungsform fehlt hier also der Abschnitt 34.

Die RF-Koax-B-Feld-Spule 22 der Fig. 8f entspricht der RF-Koax-B-Feld-Spule 22 der Fig. 8d, wobei der Hauptleiter 26 zusätzlich nach einer halben Windung mit dem Abschirmleiter 28 elektrisch verbunden ist.

Der jeweilige elektrisch unterbrochene Abschnitt 34, 34' muss nicht zwingend an der in dem jeweiligen Ausführungsbeispiel gezeigten Position angeordnet sein. Insbesondere muss der Abschnitt 34 z.B. von Fig. 8b nicht nach einer halben Windung positioniert sein.

Es versteht sich, dass die erläuterten RF-Koax-B-Feld-Spulen 22 lediglich beispielhaft im Hinblick auf ihren grundsätzlichen Aufbau gezeigt sind. Selbstverständlich kann die Windungszahl bei ansonsten gleichbleibendem Aufbau erhöht werden. Sämtliche in den Figuren gezeigten Resonanzspektren 10, 20, 30, 40, 50 sind mit einer jeweiligen Primärspule des Typs der RF-Koax-B-Feld-Spule 22 von Fig. 8d ermittelt worden (mit unterschiedlicher Windungszahl und einem Spulendurchmesser von 60 cm, Sekundärspule mit Ausnahme der Spektren 20d', 20d" lose an Primärspule gelegt).

Die Ermittlung eines jeweiligen Resonanzspektrums 10, 20, 30, 40, 50 kann eine Mittelung einzelner Messinstanzen (einzelne Messung eines Resonanzspektrums) umfassen. Somit besitzen die in den Figuren gezeigten Resonanzspektren experimentellen Charakter, d.h. die konkrete Ausbildung des Resonanzspektrums kann im Einzelfall, je nach Messbedingungen, von den gezeigten Verläufen abweichen. Wie dem Fachmann jedoch gegenwärtig ist, belegen die gezeigten Resonanzspektren den erfindungsgemäßen Effekt, nämlich das Resonanzverhalten einer Spulenanordnung durch wenigstens eine Sekundärspule selektiv zu beeinflussen.

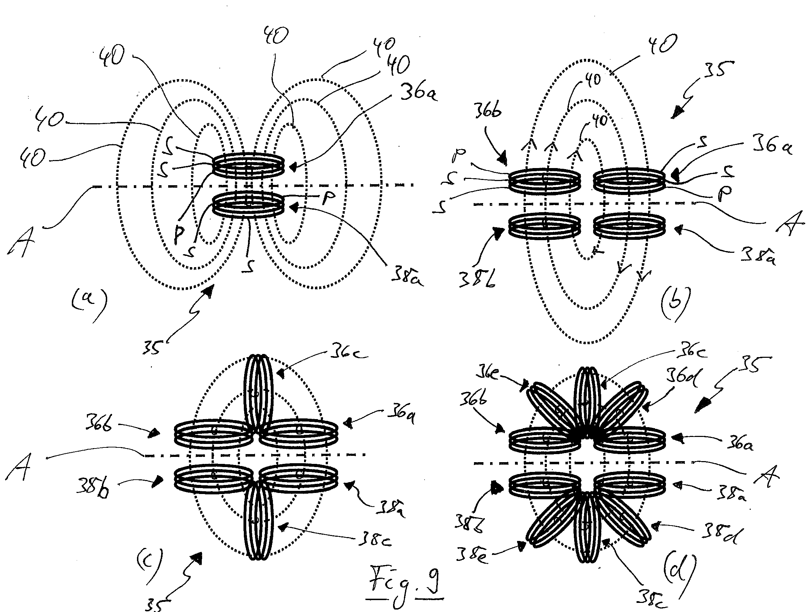

In Fig. 9a bis 9d sind verschiedene Systeme 35 jeweils mit wenigstens einer ersten Spulenanordnung 36a zum Erzeugen von Magnetwechselfeldern und mit wenigstens einer zweiten Spulenanordnung 38a zum Aufnehmen von Magnetwechselfeldern dargestellt. Rein beispielhaft umfassen die Spulenanordnungen 36a, 38a jeweils eine Primärspule P und zwei Sekundärspulen S. Die in Fig. 9a dargestellte Anordnung "SSP" (von oben gesehen) kann sowohl bei der ersten als auch der zweiten Spulenanordnung 36a, 38a abweichend sein, also "SPS" oder "PSS". Dies gilt in analoger Form auch für die Ausführungsformen der Fig. 9b bis 9d.

Grundsätzlich gilt, dass jede Spulenanordnung 36a - 36e, 38a - 38d individuell angepasst werden kann (z.B. hinsichtlich der Anzahl und Ausgestaltung der Spulen P, S und deren relative Anordnung), um die Eigenschaften des jeweiligen Systems 35 zu optimieren.

In Fig. 9a sind die Spulenanordnungen 36a, 38a koaxial zueinander angeordnet, wobei ein großer Teil des sich durch die Spulenanordnungen 36a, 38a erstreckenden Magnetwechselfeldes außerhalb der Spulenanordnungen 36a, 38a verläuft, was durch Magnetfeldlinien 40 rein schematisch angedeutet ist.

Das System 35 der Fig. 9b entspricht dem System 35 der Fig. 9a, wobei zusätzlich eine weitere erste Spulenanordnung 36b und eine weitere zweite Spulenanordnung 38b vorgesehen sind, die jeweils (z.B. parallel oder seriell mit der benachbarten Spulenanordnung 36a, 38a geschaltet) synchron betrieben werden können. Das System 35 der Fig. 9a ist somit gewissermaßen verdoppelt, wobei die Spulenanordnungen 36a, 36b und 38a, 38b jeweils um 180° gedreht sein können, sodass sich das gemeinsame Magnetfeld gleichsinnig durch alle Spulenanordnungen erstreckt (siehe mit Pfeilen versehene Magnetfeldlinien 40 in Fig. 9b). Somit kann eine vorteilhafte, die Systemeffizienz fördernde Erhöhung des magnetischen Flusses erzielt werden. Dies ist auch erkennbar an der veränderten Form des Magnetwechselfeldes (vgl. schematische Magnetfeldlinien 40), das sich im Vergleich zu dem System 35 der Fig. 9a überwiegend parallel zur "Übertragungsrichtung" (quer zu der Hilfslinie A) erstreckt.

Es versteht sich, dass die ersten und zweiten Spulenanordnungen 36a, 36b und 38a, 38b in Fig. 9b zur Erzielung des gleichsinnigen Magnetfeldes nicht notwendigerweise jeweils um 180° gedreht sein müssen. Alternativ kann auch die Bestromungsrichtung der Primärspulen P geändert werden. Die Anordnung der Primärspulen P und Sekundärspulen S also auch spiegelsymmetrisch sein.

Der Anteil des Magnetwechselfeldes, der sich durch die Spulenanordnungen 36, 38 erstreckt und somit effektiv nutzbar ist, kann weiter erhöht werden, indem das System 35 um weitere Spulenanordnungen 36c, 38c ergänzt wird. In Fig. 9c sind in einem Winkel von 90° relativ zu den Spulenanordnungen 36a, 36b, 38a, 38b eine weitere erste Spulenanordnung 36c und eine weitere zweite Spulenanordnung 38c angeordnet, die jeweils parallel geschaltet sein können. Ein Vorteil dieser Variante besteht darin, dass sich die Spulenanordnungen 36a bis 36c bzw. 38a bis 38c bei einem Winkel von 90° zueinander bezüglich ihres Resonanzverhaltens allenfalls geringfügig gegenseitig beeinflussen. In Fig. 9d ist gezeigt, dass der erkennbare Effekt eines "zusammengezogenen Magnetfeldes" weiter verstärkt werden kann, indem das System 35 um zusätzliche erste und zweite Spulenanordnungen 36d, 36e und 38d, 38e ergänzt wird, die - rein beispielhaft - jeweils in einem Winkel von 45° relativ zu den anderen ersten und zweiten Spulenanordnungen 36a bis 36c und 38a bis 38c angeordnet sind.

### Bezugszeichenliste

- 10a - f, 20a - f, 30a - f, 40a - e, 50a - e: Resonanzspektrum
- 12: Koordinatensystem
- 14: x-Achse
- 16: y-Achse
- 18: Messpunkt
- 22: RF-Koax-B-Feld-Spule
- 24: Koaxialkabel
- 26: Hauptleiter
- 28: Abschirmleiter
- 32: Isolationsmaterial
- 34, 34': Abschnitt
- 35: System
- 36a - e: erste Spulenanordnung
- 38a - e: zweite Spulenanordnung
- 40: Magnetfeldlinie
- A: Hilfslinie
- P: Primärspule
- S: Sekundärspule

## Patentansprüche

1. Spulenanordnung zur Erzeugung oder zur Aufnahme von Magnetwechselfeldern, umfassend:
wenigstens eine Primärspule (P) mit zumindest einer Windung und
wenigstens eine zur selektiven Beeinflussung des Resonanzverhaltens der Spulenanordnung vorgesehene Sekundärspule (S) mit zumindest einer Windung,
wobei die Primärspule (P) einen Hauptleiter (26) und einen den Hauptleiter (26) zumindest abschnittsweise umgebenden Abschirmleiter (28) aufweist, wobei der Abschirmleiter (28) mit dem Hauptleiter (26) elektrisch leitend verbunden ist und zumindest einen Abschnitt (34, 34') aufweist, der elektrisch unterbrochen ist und, wobei die Primärspule und die Sekundärspule elektrisch nicht mit einander verbunden sind.

2. Spulenanordnung nach Anspruch 1,
**dadurch gekennzeichnet, dass**
die wenigstens eine Sekundärspule (S) einen Hauptleiter und einen den Hauptleiter zumindest abschnittsweise umgebenden Abschirmleiter aufweist, insbesondere wobei der Abschirmleiter nicht elektrisch leitend mit dem Hauptleiter verbunden ist und/oder keine elektrische Unterbrechung aufweist.

3. Spulenanordnung nach Anspruch 1 oder 2,
**dadurch gekennzeichnet, dass**
die Anschlüsse der Sekundärspule (S) offen sind.

4. Spulenanordnung nach zumindest einem der vorstehenden Ansprüche,
**dadurch gekennzeichnet, dass**
die Primärspule (P) und/oder die Sekundärspule (S) zumindest abschnittsweise als Koaxialkabel (24) ausgebildet sind.

5. Spulenanordnung nach zumindest einem der vorstehenden Ansprüche,
**dadurch gekennzeichnet, dass**
die wenigstens eine Sekundärspule (S) koaxial zu der Primärspule (P) angeordnet ist.

6. Spulenanordnung nach zumindest einem der vorstehenden Ansprüche,
**dadurch gekennzeichnet, dass**
die wenigstens eine Sekundärspule (S) - direkt oder indirekt - an der Primärspule (P) befestigt ist.

7. Spulenanordnung nach zumindest einem der vorstehenden Ansprüche,
**dadurch gekennzeichnet, dass**
der Durchmesser der Sekundärspule (S) zumindest im Wesentlichen gleich dem Durchmesser der Primärspule (P) ist.

8. Spulenanordnung nach zumindest einem der vorstehenden Ansprüche,
**dadurch gekennzeichnet, dass**
die Sekundärspule (S) mit einem Datensignal beaufschlagbar ist und/oder zum Empfang eines Datensignals ausgebildet ist.

9. System (35) mit wenigstens einer ersten Spulenanordnung (36) zum Erzeugen von Magnetwechselfeldern und mit wenigstens einer zweiten Spulenanordnung (38) zum Aufnehmen von Magnetwechselfeldern,
wobei die erste und/oder die zweite Spulenanordnung (36, 38) nach zumindest einem der vorhergehenden Ansprüche ausgebildet sind.

10. System (35) nach Anspruch 9,
**dadurch gekennzeichnet, dass**
das Resonanzverhalten der ersten Spulenanordnung (36) und das Resonanzverhalten der zweiten Spulenanordnung (38) aneinander angepasst sind.

11. System (35) nach Anspruch 9 oder 10,
**dadurch gekennzeichnet, dass**
die erste und die zweite Spulenanordnung (36, 38) zur Übertragung eines Datensignals jeweils gemäß Anspruch 8 ausgebildet ist.

12. Verwendung einer Spulenanordnung (36, 38) nach zumindest einem der Ansprüche 1 bis 7 zur drahtlosen Versorgung eines elektrischen Energiespeichers, insbesondere einer mobilen elektrischen oder elektronischen Vorrichtung, mit elektrischer Energie.

13. Verwendung zumindest einer Spulenanordnung (36, 38) nach Anspruch 8 zur Übertragung eines Datensignals.

14. Verwendung eines Systems (35) nach Anspruch 9, wobei die Primärspule (P) der ersten Spulenanordnung (36) mit einem elektrischen Versorgungsnetz gekoppelt ist und die Primärspule (P) der zweiten Spulenanordnung (38) mit einem elektrischen Energiespeicher, insbesondere einer mobilen elektrischen oder elektronischen Vorrichtung, gekoppelt ist.

15. Verwendung zumindest einer Spulenanordnung (36, 38) nach Anspruch 1 zur Übertragung von Datensignalen, wobei die Sekundärspule (S) der ersten Spulenanordnung (36) mit einer Datenquelle gekoppelt ist und die Sekundärspule (S) der zweiten Spulenanordnung (38) mit einem Datenempfänger gekoppelt ist, und umgekehrt.

## Claims

1. A coil assembly for generating or for receiving alternating magnetic fields, said coil assembly comprising:
at least one primary coil (P) having at least one winding; and
at least one secondary coil (S) provided for a selective influencing of the resonance behavior of the coil assembly and having at least one winding,
wherein the primary coil (P) has a main conductor (26) and a shielding conductor (28) at least sectionally surrounding the main conductor (26);
wherein the shielding conductor (28) is electrically conductively connected to the main conductor (26) and has at least one section (34, 34') which is electrically interrupted; and wherein the primary coil and the secondary coil are not electrically connected to one another.

2. A coil assembly in accordance with claim 1,
**characterized in that**
the at least one secondary coil (S) has a main conductor and a shielding conductor at least sectionally surrounding the main conductor, in particular with the shielding conductor not being electrically conductively connected to the main conductor and/or not having any electrical interruption.

3. A coil assembly in accordance with claim 1 or claim 2,
**characterized in that**
the terminals of the secondary coil (S) are open.

4. A coil assembly in accordance with at least one of the preceding claims,
**characterized in that**
the primary coil (P) and/or the secondary coil (S) is/are at least sectionally configured as a coaxial cable or as coaxial cables (24).

5. A coil assembly in accordance with at least one of the preceding claims,
**characterized in that**
the at least one secondary coil (S) is arranged coaxially to the primary coil (P).

6. A coil assembly in accordance with at least one of the preceding claims,
**characterized in that**
the at least one secondary coil (S) is - directly or indirectly - fastened to the primary coil (P).

7. A coil assembly in accordance with at least one of the preceding claims,
**characterized in that**
the diameter of the secondary coil (S) is at least substantially equal to the diameter of the primary coil (P).

8. A coil assembly in accordance with at least one of the preceding claims,
**characterized in that**
the secondary coil (S) can be acted on by a data signal and/or is configured to receive a data signal.

9. A system (35) having at least one first coil assembly (36) for generating alternating magnetic fields and having at least one second coil assembly (38) for receiving alternating magnetic fields,
wherein the first and/or second coil assemblies (36, 38) is/are configured in accordance with at least one of the preceding claims.

10. A system (35) in accordance with claim 9,
**characterized in that**
the resonance behavior of the first coil assembly (36) and the resonance behavior of the second coil assembly (38) are adapted to one another.

11. A system (35) in accordance with claim 9 or claim 10,
**characterized in that**
the first and second coil assemblies (36, 38) are configured for transmitting a data signal in each case in accordance with claim 8.

12. Use of a coil assembly (36, 38) in accordance with at least one of the claims 1 to 7 for a wireless supply of an electrical energy store, in particular of a mobile electric or electronic apparatus, with electrical energy.

13. Use of at least one coil assembly (36, 38) in accordance with claim 8 for transmitting a data signal.

14. Use of a system (35) in accordance with claim 9,
wherein the primary coil (P) of the first coil assembly (36) is coupled to an electrical supply network and the primary coil (P) of the second coil assembly (38) is coupled to an electrical energy store, in particular to a mobile electric or electronic apparatus.

15. Use of at least one coil assembly (36, 38) in accordance with claim 1 for transmitting data signals, wherein the secondary coil (S) of the first coil assembly (36) is coupled to a data source and the secondary coil (S) of the second coil assembly (38) is coupled to a data receiver, and vice versa.

## Revendications

1. Ensemble de bobines pour la génération ou l'encaissement de champs magnétiques alternatifs, comprenant :
au moins une bobine primaire (P) ayant au moins une spire, et
au moins une bobine secondaire (S) ayant au moins une spire et prévue pour influencer de manière sélective le comportement de résonance de l'ensemble de bobines,
dans lequel
la bobine primaire (P) comprend un conducteur principal (26) et un conducteur de protection (28) entourant le conducteur principal (26) au moins localement,
le conducteur de protection (28) est relié de manière électriquement conductrice au conducteur principal (26) et comporte au moins une portion (34, 34') qui est électriquement interrompue, et
la bobine primaire et la bobine secondaire ne sont pas reliées électriquement entre elles.

2. Ensemble de bobines selon la revendication 1,
**caractérisé en ce que**
ladite au moins une bobine secondaire (S) comprend un conducteur principal et un conducteur de protection entourant le conducteur principal au moins localement, en particulier le conducteur de protection n'étant pas relié de manière électriquement conductrice au conducteur principal et/ou ne présentant aucune interruption électrique.

3. Ensemble de bobines selon la revendication 1 ou 2,
**caractérisé en ce que**
les bornes de la bobine secondaire (S) sont ouvertes.

4. Ensemble de bobines selon l'une au moins des revendications précédentes,
**caractérisé en ce que**
la bobine primaire (P) et/ou la bobine secondaire (S) sont réalisées au moins localement sous forme de câble coaxial (24).

5. Ensemble de bobines selon l'une au moins des revendications précédentes,
**caractérisé en ce que**
ladite au moins une bobine secondaire (S) est disposée coaxialement par rapport à la bobine primaire (P).

6. Ensemble de bobines selon l'une au moins des revendications précédentes,
**caractérisé en ce que**
ladite au moins une bobine secondaire (S) est fixée directement ou indirectement à la bobine primaire (P).

7. Ensemble de bobines selon l'une au moins des revendications précédentes,
**caractérisé en ce que**
le diamètre de la bobine secondaire (S) est au moins sensiblement égal au diamètre de la bobine primaire (P).

8. Ensemble de bobines selon l'une au moins des revendications précédentes,
**caractérisé en ce que**
la bobine secondaire (S) peut être sollicitée par un signal de données et/ou est réalisée pour recevoir un signal de données.

9. Système (35) comportant au moins un premier ensemble de bobines (36) pour la génération de champs magnétiques alternatifs et au moins un second ensemble de bobines (38) pour l'encaissement de champs magnétiques alternatifs,
le premier et/ou le second ensemble de bobines (36, 38) étant réalisé(s) selon l'une au moins des revendications précédentes.

10. Système (35) selon la revendication 9,
**caractérisé en ce que**
le comportement de résonance du premier ensemble de bobines (36) et le comportement de résonance du second ensemble de bobines (38) sont adaptés l'un à l'autre.

11. Système (35) selon la revendication 9 ou 10,
**caractérisé en ce que**
le premier et le second ensemble de bobines (36, 38) sont réalisés chacun selon la revendication 8 pour la transmission d'un signal de données.

12. Utilisation d'un ensemble de bobines (36, 38) selon l'une au moins des revendications 1 à 7 pour l'alimentation en énergie électrique sans fil d'un accumulateur d'énergie électrique, en particulier d'un dispositif électrique ou électronique mobile.

13. Utilisation d'au moins un ensemble de bobines (36, 38) selon la revendication 8 pour la transmission d'un signal de données.

14. Utilisation d'un système (35) selon la revendication 9,
dans laquelle
la bobine primaire (P) du premier ensemble de bobines (36) est couplée à un réseau d'alimentation électrique, et la bobine primaire (P) du second ensemble de bobines (38) est couplée à un accumulateur d'énergie électrique, en particulier à un dispositif électrique ou électronique mobile.

15. Utilisation d'au moins un ensemble de bobines (36, 38) selon la revendication 1 pour la transmission de signaux de données,
dans laquelle
la bobine secondaire (S) du premier ensemble de bobines (36) est couplée à une source de données, et la bobine secondaire (S) du second ensemble de bobines (38) est couplée à un récepteur de données, et inversement.
